# EUROPEAN PATENT APPLICATION

(11) **EP 4 576 011 A1**
(43) Date of publication of application: **25.06.2025**
(21) Application number: 23219870.5
(22) Date of filing: 22.12.2023
(51) Int. Cl.: G06V 10/82, G06V 20/56

(54) **METHOD FOR DETERMINING AND EVALUATING A TRAJECTORY OF A ROAD USER**

(71) Applicant: Aptiv Technologies AG, 8200 Schaffhausen (CH)
(72) Inventor: Waldeyer, Tamino, 42119 Wuppertal (DE); ZHAO, Kun, 40235 Duesseldorf (DE); Schäfer, Maximilian, 42117 Wuppertal (DE)
(74) Representative: Manitz Finsterwald Patent- und Rechtsanwaltspartnerschaft mbB

(57) **Abstract**

A computer implemented method for determining and evaluating a trajectory of a road user is provided. Input data associated with a state of movement and with an environment of the road user is received. Characteristics related to the road user are extracted from the input data. One or more trajectory end points are determined for the road user by using extracted characteristics. For each of the trajectory end points, a respective trajectory associated with one of the trajectory end points is determined by using the associated trajectory end point and the extracted characteristics, and the respective trajectory of the road user is evaluated by using a classification which relies on the extracted characteristics to provide a confidence score for each trajectory associated with one of the trajectory end points.

## Description

### FIELD

The present disclosure relates to a computer implemented method for determining and evaluating a trajectory of a road user.

### BACKGROUND

For autonomous driving, it is an important and challenging task to understand the entire traffic scene surrounding an autonomous vehicle, e.g. to understand the road structure, to recognize intentions of other road users like other vehicles and pedestrians, and to predict the future motion of all road users. Planning a safe and convenient future trajectory for the autonomous vehicle heavily depends on understanding the traffic scene in the external environment of the autonomous vehicle and anticipating its dynamics.

In order to predict the future trajectories of surrounding road users precisely, the influence of the static environment like lane and road structure, traffic signs etc. and, in addition, the interactions between the road users need to be considered and modelled. The interactions between road users have different time horizons and various distances which leads to a high complexity.

Existing approaches for trajectory prediction may generate multiple future trajectories for road user, and each of these future trajectories may be feasible. Hence, one of the challenges for the trajectory prediction task is to provide some ranking of the generated future trajectories, i.e. which of the predicted future trajectories are more likely than other ones.

For example, the existing approaches for trajectory prediction may rely on entity-based models which encode every road user and e.g. different parts of abstract representations of roads surrounding the autonomous vehicle. However, such entity-based models usually scale with the number of road users in a region of interest, i.e. in the external environment of the autonomous vehicle.

Other known approaches use grid maps in a so-called bird's-eye view which may contain very detailed information regarding the environment of the autonomous vehicle. Such grid-based maps or models may be regarded as a projection of the three-dimensional world and are usually independent from the number of road users regarding run time.

Such approaches using grid maps usually predict a so-called heat map including probable future locations of the road users in a traffic scene of the environment of the autonomous vehicle. Hence, the resulting grid maps may provide respective probabilities for multiple future trajectories within the respective cells of the grid map, and such multiple future trajectories may be learned via special convolutional kernels which are incorporated in machine learning algorithms of the respective approach. Moreover, input from different sensors may be combined quite easily by such approaches which are based on grid maps.

However, the predicted probability distributions may not be easily accessible in the resulting heat map such that a suitable post-processing and a sampling may be required to extract the actual coordinates and further dynamic properties of road users along the predicted future trajectories.

Accordingly, there is a need to have a method which predicts at least one trajectory of a road user with a reduced effort and which allows for assessing the reliability of the trajectory.

### SUMMARY

The present disclosure provides a computer implemented method, a computer system and a non-transitory computer readable medium according to the independent claims. Embodiments are given in the subclaims, the description and the drawings.

In one aspect, the present disclosure is directed at a computer implemented method for determining and evaluating a trajectory of a road user. According to the method, input data associated with a state of movement and with an environment of the road user is received. Characteristics related to the road user are extracted from the input data. One or more trajectory end points are determined for the road user by using the extracted characteristics. For each of the trajectory end points, a respective trajectory associated with one of the trajectory end points is determined by using the associated trajectory end point and the extracted characteristics, and the respective trajectory of the road user is evaluated by using a classification which relies on the extracted characteristics to provide a confidence score for each trajectory associated with one of the trajectory end points.

The input data associated with the state of movement of the road user may be provided by another system which may be regarded as a so-called backbone system and which may be able to provide information relevant for the trajectory of the road user. The state of movement of the road user may include a respective position, velocity and acceleration of the road user for the predefined number of time steps.

In addition to the dynamics of the road user, a "dynamic context" and a "static context" of the road user are considered in form of input data associated with the environment of the road user. The dynamic context may include dynamic items like other road users, e.g. other vehicles and pedestrians, whereas the static context may include static items like lane markings for indicating the course of a road or traffic signs. The characteristics and dynamics of the other road users, i.e. the dynamic context, may also be provided by the backbone system, in addition to the characteristics of static entities in the environment, i.e. the static context, which may be relevant for the road user's trajectory.

However, such information may be provided in an encoded abstract form, i.e. by a prediction algorithm representing the backbone system. For example, the input data may be related to so-called feature maps, i.e. grid maps for the respective future time steps which include the relevant information regarding the road user within different cells of the grid map. Moreover, the input data may also include information regarding the static and dynamic context of the road user in an encoded abstract format.

Hence, the existence of the input data which may be received e.g. from the backbone system is a prerequisite for performing the method according to disclosure. That is, the input data may depend on data provided by one or more sensors of a perception system which may be installed at an autonomous vehicle, for example, and the data detected by such a perception system may already be pre-processed regarding the state of movement of the road user in order to provide the input data which is received by the method according to disclosure.

The step of extracting characteristics related to the road user from the input data is required since the input data may be provided in the encoded abstract form as mentioned above, e.g. by an encoder of the backbone system. The backbone system may have a multi-scale structure such that the output provided by the system, e.g. the feature maps, may need to be further processed in order to provide data being suitable for determining one or more trajectory end points in the next method step. For example, a convolutional neural network may be used for the step of extracting the characteristics from the feature maps.

In most practical cases, a plurality of trajectory end points, i.e. more than one trajectory end point, may be determined for the road user by using the characteristics extracted from the input data, and one single trajectory of the road user may be determined for each of the plurality of trajectory end points by using the respective trajectory end point and the characteristics extracted from the input data. Each trajectory of the road user may be evaluated by using the classification.

Hence, the task of generating and accessing multiple trajectories for a certain road user may be transferred to the task of determining multiple end points and determining one single trajectory for each of the end points. This may drastically reduce the computational effort required.

For the evaluation of the respective trajectory being determined for the respective end point, the classification may be provided or learned by applying ground truth data including known trajectories which are associated with perception data received for a corresponding traffic scene. The perception data may also be processed by the backbone system which may result in corresponding input data on which the steps of extracting characteristics, determining one or more trajectory end points and determining a predicted trajectory may be applied in order to relate this predicted trajectory to one of the known trajectories, e.g. by using the framework of a generative adversarial network (GAN), in order to learn the classification of a trajectory of a road user.

The confidence score for each trajectory associated with one of the trajectory end points may also be provided as an output of the method e.g. to further applications or control systems of a vehicle applying the method. Hence, the further applications and systems may be provided with information regarding the reliability and feasibility of the trajectories determined by the method in order to select the best of these trajectories for controlling the vehicle.

By evaluating each of the trajectories in order to provide the confidence score, a ranking may be provided which may indicate the most feasible or most realistic trajectory of the road user. The confidence score of the respective trajectory may be represented as a probability. That is, the confidence score may be provided as a single number from 0 to 1.

The output of the method, i.e. one or more evaluated trajectories for the road user, may be provided for a further method or a further system which may be able to select a final trajectory of the road user based on the evaluated trajectories. In other words, the last method step of evaluating the respective trajectory of the road user may be regarded as a discriminator step which may provide a single number or value for each trajectory in order to evaluate the respective trajectories, i.e. to quantify how realistic the respective trajectory is. For example, the further system or method may select a most probable trajectory having the best evaluation.

One advantage of the method according to the disclosure is that a possible multi-modality provided by the backbone or prediction system, i.e. due specific input data for which more than one feasible trajectory of the road user may be generated, is treated by determining one or more trajectory end points only instead of determining one or more entire trajectories. Hence, the necessary post-processing and the computational effort required for performing the method are reduced.

Moreover, the extracted characteristics are utilized when determining one or more trajectory end points, when determining the respective trajectory for the associated end point and when providing the classification of the respective trajectory. The method steps are therefore repeatedly related to the extracted characteristics reflecting the traffic scene in which the road user is currently located. Due to this, the reliability of the method's output may be improved.

In addition, the method provides an assessment for the feasibility of a trajectory by the result of the evaluation step. This may support the planning of the future trajectory e.g. of an autonomous vehicle since a planning system or method may rely on the evaluation of one or more trajectories of the road user for the future time steps.

According to an embodiment, the method may rely on at least one machine learning algorithm, and the input data may include embedded features which may be provided by a prediction algorithm and which may include information regarding other road users and regarding a static environment of the road user, i.e. in addition to the information regarding the state of movement of the road user under consideration. A feature extraction algorithm may be applied to the embedded features in order to provide the extracted characteristics.

The feature extraction algorithm of the machine learning algorithm on which the method relies may therefore be able to extract relevant information regarding the road user under consideration, regarding other road users and regarding the static environment of the road user such that the extracted information is suitable for determining one or more trajectory end points. The machine learning algorithm may be configured to learn extracting the relevant information and to determine one or more trajectory end points based thereon, e.g. by a training procedure using realistic trajectory end points.

As mentioned above, the data provided by the feature extraction algorithm is additionally used for determining and evaluating the respective trajectory of the road user. Hence, the input data provided as embedded features and the characteristics extracted therefrom may not only be used for determining one or more trajectory end points, but also to support the steps of determining the entire trajectory and of evaluating the respective trajectory.

Determining one or more trajectory end points for the road user may include applying a machine learning algorithm configured to learn encoding the extracted characteristics and ground truth data of real trajectories into at least one latent variable. The machine learning algorithm may further be configured to learn decoding the at least one latent variable into a respective predicted trajectory end point related to a respective one of the real trajectories. In addition, determining the at least one trajectory end point for the road user by using the extracted characteristics may further include sampling the at least one latent variable from a prior distribution provided by the machine learning algorithm when learning to encode the extracted features and the ground truth data of real trajectories, and decoding the at least one latent variable into one or more trajectory end points.

That is, a separate encoding-decoding procedure may be used for the step of determining one or more trajectory end points. Hence, the machine learning algorithm for determining the trajectory end points may be trained independently from the further parts of the machine learning algorithm on which the entire method relies. Since the machine learning algorithm may be trained by real or known trajectories having known end points for a given time frame, i.e. predefined time steps, the reliability of the prediction of the trajectory end points may be improved. As a result of the training, the prior distribution may be provided such that the method may be able to sample the latent variable from the prior distribution during inference, i.e. during the operation phase of the method. Furthermore, the at least one latent variable may be a continuous latent variable which may be decoded for providing one or more trajectory end points.

Determining the respective trajectory of the road user may include determining positions of the road user starting from the current position of the road user up to the associated trajectory end point, and determining dynamic parameters of the road user for each of the positions. The dynamic parameters may include a velocity, an acceleration and/or a yaw rate of the road user under consideration, for example. Therefore, the determined trajectory of the road user may not only be considered as a "future line" for the movement of the road user, but it may also include the dynamic parameters of the road user for each of the positions. A method or system for planning the future trajectory of the road user, e.g. of an autonomous vehicle, may rely on the entire set of information including the future positions and the future dynamic parameters of the road user.

In addition, determining the respective trajectory of the road user may include applying a machine learning algorithm which may be configured to learn parameters of a bicycle model. The parameters of the bicycle model may include an acceleration and a yaw rate of a road user, for example. Although such a machine learning algorithm may include a neural network, for example, which may learn determining the acceleration and the yaw rate of the road user, the underlying bicycle model may require a low computational effort.

According to a further embodiment, the machine learning algorithm may be trained regarding the step of evaluating of the trajectory i) by providing ground truth trajectories and predicted trajectories for a plurality of road users, wherein the predicted trajectories may be determined by applying extracted characteristics derived from training input data associated with a respective state of movement and a respective environment of each of the plurality of road users, and ii) by learning the classification of the road user by applying a generative adversarial network to the ground truth trajectories and the predicted trajectories.

In other words, the method may learn the assessment or classification of predicted trajectories by data related to feasible real trajectories for which corresponding predictions may be provided by the method, e.g. by a generator of the generative adversarial network (GAN). The trajectory predictions may be evaluated by a discriminator of the generative adversarial network during the training based on the ground truth trajectories.

In other words, a supervised learning may be performed by applying the generative adversarial network. When performing the supervised learning, the ground truth trajectories may have the label of a "true trajectory" while the predicted trajectories may have the label of a "false trajectory". The goal is to train a classifier which provides the classification in such a manner to try to distinguish between these two types of trajectories. At the same time, a prediction algorithm, e.g. a trajectory generator, may try to predict the trajectory as "real" as possible. At the end of the training, the classifier may therefore not be able to tell a difference between the predicted and ground truth trajectories.

By such a training of the machine learning algorithm based on real trajectories, a reliable assessment or classification of the trajectories provided by the method may be achieved. As mentioned above, during inference the extracted characteristics reflecting the dynamic of the road user and its dynamic and static context may be considered when classifying or evaluating the predicted trajectories.

Moreover, a generative adversarial network may be utilized to provide the classification for evaluating the respective trajectory of the road user. For example, a discriminator of the generative adversarial network may not only be able to assess the respective trajectories in order to improve the trajectory prediction provided by a trajectory generator, but also to provide the classification of the respective trajectory on which the confidence score is based.

A common training procedure of the machine learning algorithm may be performed for the steps of determining and evaluating the respective trajectory of the road user. Therefore, the step of evaluating or assessing the trajectory may interact with the step of determining the one or more trajectories by applying their respective end points determined before. Due to this interaction of the two method steps during the common training which may also be provided by the generative adversarial network, better trajectories, i.e. trajectories being improved regarding safety, reliability and feasibility, may be determined in the first of these two method steps. The training of the machine learning algorithm may rely on a combination of a mean squared error loss and a minmax loss which ensures convergence of the training.

In another aspect, the present disclosure is directed at a computer system, said computer system being configured to carry out several or all steps of the computer implemented method described herein.

The computer system may comprise a processing unit, at least one memory unit and at least one non-transitory data storage. The non-transitory data storage and/or the memory unit may comprise a computer program for instructing the computer to perform several or all steps or aspects of the computer implemented method described herein.

As used herein, terms like processing unit and module may refer to, be part of, or include an Application Specific Integrated Circuit (ASIC), an electronic circuit, a combinational logic circuit, a field programmable gate array (FPGA), a processor (shared, dedicated, or group) that executes code, other suitable components that provide the described functionality, or a combination of some or all of the above, such as in a system-on-chip. The processing unit may include memory (shared, dedicated, or group) that stores code executed by the processor.

According to an embodiment, the computer system may further comprise an end point generator configured to determine one or more trajectory end points for a road user by using characteristics extracted from input data, a trajectory generator configured to determine, for each of the trajectory end points, a respective trajectory associated with one of the trajectory end points by using the associated trajectory end point and the extracted characteristics, and a discriminator configured to evaluate each trajectory associated with one of the trajectory end points.

Moreover, the end point generator, the trajectory generator and the discriminator may be implemented as a generative adversarial network, and the discriminator may be configured to evaluate each trajectory by using a classification provided by the generative adversarial network.

In another aspect, the present disclosure is directed at a vehicle including a perception system and the computer system as described herein.

According to an embodiment, the vehicle may further include a control system being configured to control the actual trajectory of the vehicle. The computer system may be configured to transfer at least one evaluated trajectory of the road user to the control system in order to enable the control system to apply the at least one evaluated trajectory of the road user when controlling the actual trajectory of the vehicle.

In another aspect, the present disclosure is directed at a non-transitory computer readable medium comprising instructions for carrying out several or all steps or aspects of the computer implemented method described herein. The computer readable medium may be configured as: an optical medium, such as a compact disc (CD) or a digital versatile disk (DVD); a magnetic medium, such as a hard disk drive (HDD); a solid state drive (SSD); a read only memory (ROM); a flash memory; or the like. Furthermore, the computer readable medium may be configured as a data storage that is accessible via a data connection, such as an internet connection. The computer readable medium may, for example, be an online data repository or a cloud storage.

The present disclosure is also directed at a computer program for instructing a computer to perform several or all steps or aspects of the computer implemented method described herein.

### DRAWINGS

Exemplary embodiments and functions of the present disclosure are described herein in conjunction with the following drawings, showing schematically:
- Fig. 1: an illustration of a vehicle including a computer system according to the disclosure and of the vehicle's surroundings,
- Fig. 2: an illustration of am example of a network architecture for providing input data to the method according to the disclosure,
- Fig. 3: an overview of the method according to the disclosure,
- Fig. 4: a detailed illustration of the method according to the disclosure,
- Fig. 5: a flow diagram illustrating a method for determining a trajectory of a road user according to various embodiments,
- Fig. 6: an illustration of a system according to various embodiments, and
- Fig. 7: a computer system with a plurality of computer hardware components configured to carry out steps of a computer implemented method as described herein.

### DETAILED DESCRIPTION

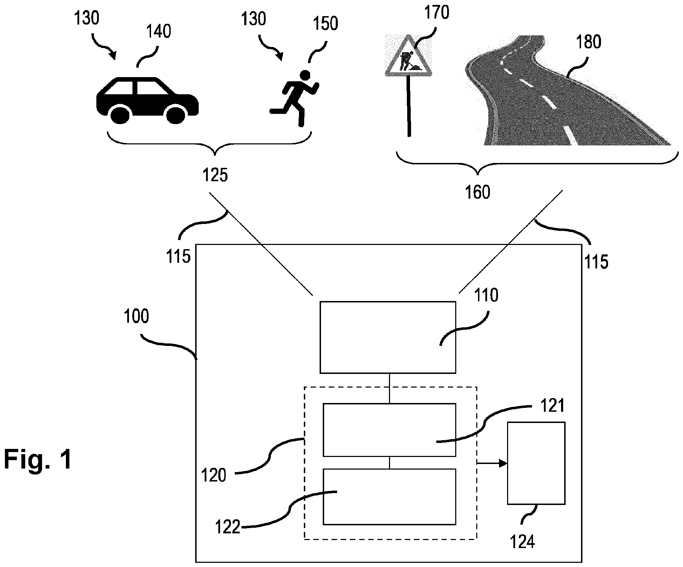

Fig. 1 depicts a schematic illustration of a vehicle 100 and of objects possibly surrounding the vehicle 100 in a traffic scene. The vehicle 100 includes a perception system 110 having an instrumental field of view which is indicated by lines 115. The vehicle 100 further includes a computer system 120 including a processing unit 121 and a data storage system 122 which includes a memory and a database, for example. The processing unit 121 is configured to receive data from the perception system 110 and to store data in the data storage system 122. The vehicle 100 further includes a control system 124 which is configured to set and to control the actual trajectory of the vehicle 100.

The perception system 110 may include a radar system, a LiDAR system and/or one or more cameras in order to monitor the external environment or surroundings of the vehicle 100. Therefore, the perception system 110 is configured to monitor a dynamic context 125 of the vehicle 100 which includes a plurality of road users 130 which are able to move in the external environment of the vehicle 100. The road users 130 may include other vehicles 140 and/or pedestrians 150, for example.

The perception system 110 is also configured to monitor a static context 160 of the vehicle 100. The static context 160 may include traffic signs 170 and lane markings 180, for example.

The perception system 110 is configured to determine trajectory characteristics of the road users 130. The trajectory characteristics include a current position, a current velocity and an object class of each road user 130. The current position and the current velocity are determined by the perception system 110 with respect to the vehicle 100, i.e. with respect to a coordinate system having its origin e.g. at the center of mass of the vehicle 100, its x-axis along a longitudinal direction of the vehicle 100 and its y-axis along a lateral direction of the vehicle 100. Moreover, the perception system 100 determines the trajectory characteristics of the road users 130 for a predetermined number of time steps, e.g. for each 0.5s.

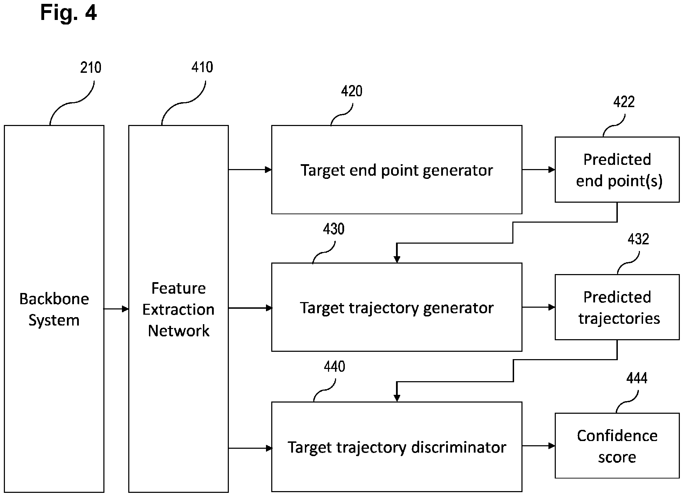

The computer system 120 transfers the result or output of the method according to the disclosure, i.e. at least one predicted trajectory 432 and an evaluation of the at least one predicted trajectory 432 in form of a confidence score 444 (see Fig. 4), to the control system 124 in order to enable the control system 124 to incorporate the at least one evaluated trajectory in controlling the actual trajectory of the vehicle 100.

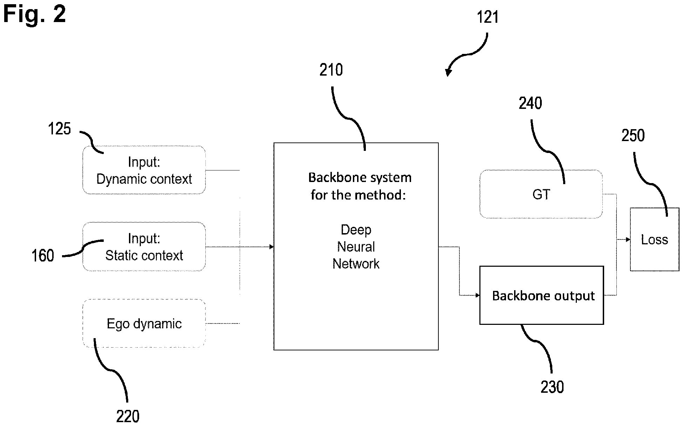

Fig. 2 depicts details of the processing unit 121 which is included in the computer system 120 of the vehicle 100 (see Fig. 1). The processing unit 121 includes a backbone system for the method of the disclosure in form of a deep neural network 210 which is provided with different inputs. The inputs include the dynamic context 125, i.e. the trajectory characteristics as described above for the road users 130, the static context 160 and ego dynamics 220 of the vehicle 100. The deep neural network 210 is used to generate a backbone output 230. When training the deep neural network 210, the backbone output 230 and a ground truth (GT) 240 are provided to a loss function 250 for optimizing the deep neural network 210.

The static context 160 includes static environment data which include the respective positions and the respective dimensions of static entities in the environment of the vehicle 100, e.g. positions and dimensions of the traffic sign 170 and of the lane markings 180, for example. The static context 160, i.e. the static environment data of the vehicle 100, are determined via the perception system 110 of the vehicle 100 and additionally or alternatively from a predetermined map which is available for the surroundings of the vehicle 100.

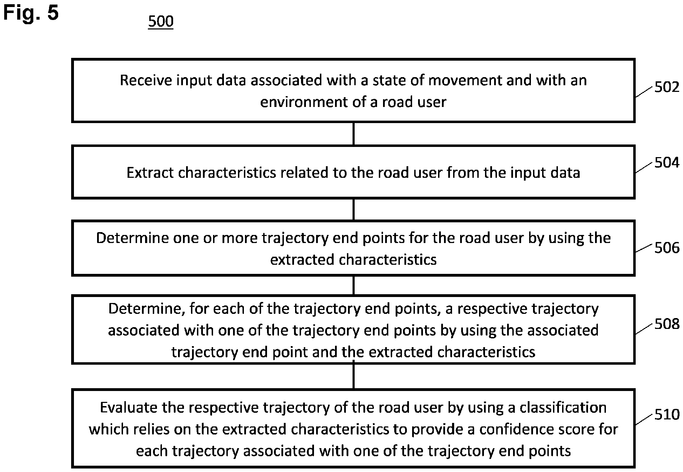

The static context 160 is represented by one or more of the following:
- a rasterized image from a HD (high definition) map (see e.g. a visualization thereof at 532 in Fig. 5), wherein the high definition map covers e.g. accurate positions of the lane marking such that a vehicle is provided with accurate information regarding its surrounding when it can be accurately located in the HD map,
- a drivable area determined via the perception system 110 of the vehicle 100, for example a grid map or image data structure, wherein each pixel of such a map or image represent the drivability of the specific area in the instrumental field of view of the perception system 110,
- a lane/road detection via sensors of the perception system 110, wherein using the detected lane markings, road boundaries, guard rails etc. from the sensor, the perception system 110 may be configured to build a grid map or image like data being similar to a rasterized map in order to describe the static context 160,
- a static occupancy grid map.

The ego dynamics 220 can also be represented as one of the road users 130 and may therefore be included in the dynamic context input.

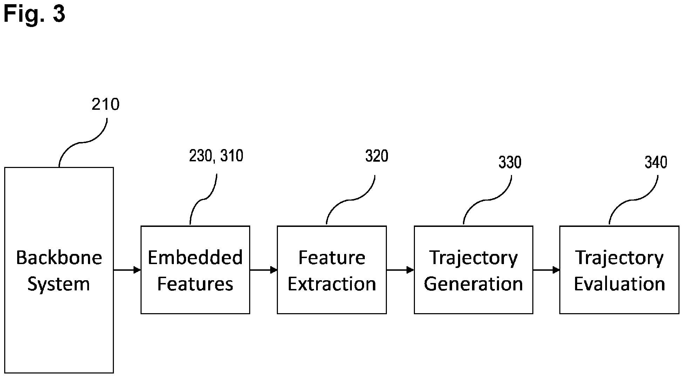

As will be described in detail below, the deep neural network 210 is used as a backbone for providing input data in form of embedded features 310 (see Fig. 3) for the method according to the disclosure. The backbone output 230 includes at least partly the embedded features 310. In an abstract form, the backbone output 230 therefore includes information related to the road users 130 and the dynamic and static contexts 125, 160.

The ground truth 240 defines the task of the deep neural network 210. It covers, for example, information regarding positions as an occupancy probability and ingrid offsets, and further properties like velocities and accelerations, and/or other regression and classification tasks, for example future positions, velocities, maneuvers etc. of the road users 130 which are monitored within the current traffic scene.

Fig. 3 depicts an overview of the most important steps and items which are relevant for the method according to disclosure. The method relies on the specific backbone output 230, 310 provided by the deep neural network 210 as described above as input data for the method. In detail, a machine learning algorithm as described in M. Schaefer et al.: "Context-Aware Scene Prediction Network (CASPNet)", arXiv: 2201.06933v1, January 18, 2022 is used within the backbone system 210 for the method according to disclosure. In detail, an encoder of the system described in this reference is applied only to represent the backbone system 210 which provides the input data for the method according to the disclosure. However, other methods and algorithms may be used for providing the input data for the method according to the present disclosure, as long as the input data is provided in a suitable form and contains proper information for generating and evaluating one or more trajectories for a specific road user 130 (see Fig. 1).

As backbone output 230, 310, the deep neural network 210 or another backbone system provides grid maps which may also be called feature maps and which include encoded data regarding a state of movement of the specific road user 130 over multiple time steps. Each cell of such a grid map includes different channels which comprise encoded information regarding the probability for the location or position of the road user 130 and additional channels for encoded information regarding different dynamic properties of the road user 130.

In order to derive one or more trajectories for the road user 130 from the backbone output 230, 310 of the deep neural network 210, i.e. from the feature maps provided for multiple future time steps, a post-processing is usually required which may be costly regarding the computational effort. In addition, the same may hold true for a refinement of the determined or generated trajectory.

Moreover, multi-modality is a general property for the task of trajectory prediction. That is, there may be multiple possible or feasible future trajectories for the road user 130 if a specific traffic scene is given including the static context 160 and the dynamic context 125 of the road user 130. The multi-modality is a challenge for a machine learning algorithm predicting trajectories since for each training sample, there is one given ground truth (GT) item only. However, the prediction system needs to include the capability to predict other choices or possibilities for the trajectory which are not given as a ground truth item. In the existing machine learning algorithms for trajectory prediction, the possibility to provide multi-modality is inherently included in the feature map which is output by the machine learning algorithm since such a feature map may model all possible future positions of the road user within the feature map which reflect the environment of the road user 130.

In order to avoid or at least to reduce the computational effort required by the post-processing of the backbone output 230, 310 of the existing prediction methods, the method according to the present disclosure is provided. As depicted in Fig. 3, the backbone output 230, 310 of the deep neural network 210, i.e. of the encoder of the system representing such a deep neural network 210, is provided as a set of embedded features which are associated with a feature map as described above.

That is, the embedded features 310 include information regarding a state of movement of the road user 130 for each grid cell, but this information is represented in an abstract form which cannot be interpreted directly.

Therefore, the method includes a feature extraction step 320 which extracts the information or characteristics regarding the road user 130 from the embedded features 310 in such a manner that the output of the feature extraction 320 is suitable for the steps of trajectory generation 330. The output of the trajectory generation step 330 is assessed or evaluated by a trajectory evaluation step 340. Hence, the output of the method according to disclosure is one or more trajectories of the road user 130 and a respective evaluation for each of these trajectories. The evaluation of each of the trajectories is provided as a confidence or probability score, i.e. a number from 0 to 1, for each trajectory.

Fig. 4 depicts details for the machine learning algorithm on which the method according to disclosure relies. The backbone output 230, 310 of the deep neural network 210 is provided as embedded features 310 to feature extraction network 410. The feature extraction network 410 provides information or characteristics regarding the state of movement of the road user 130 in a suitable manner to the further parts of the entire machine learning algorithm, i.e. to a target end point generator 420, a target trajectory generator 430 and a target trajectory discriminator 440.

The task of trajectory generation 330 (see Fig. 3) comprises two stages which are realized by the target end point generator 420 and the target trajectory generator 430. For the first stage, the target end point generator 420 is configured to predict one or more end points 422 for the specific trajectory of the road user 130. Instead of predicting one or more entire trajectories for the road user 130 in accordance with the above described multi-modality, the target end point generator 420 predicts one or more end points 422 which reflect the multi-modality in a simplified manner. Only the target end point generator 420 is requested to deal with the required multi-modality for the trajectory of the road user 130 due to the dynamic context 125 and the static context 160 of the road user 130.

For the second stage of the target trajectory generation task 330, the target trajectory generator 430 predicts one single trajectory for each of the predicted end points 422, i.e. respective trajectories reaching the specific end point 422. For the actual trajectory generation by the target trajectory generator 430, no multi-modality is to be considered since the "goal" for the respective trajectory is already given as a conditional input.

The target end point generator 420 is realized as a so-called conditional variational auto encoder (CVAE). Also, further solutions are possible for implementing the target end point generator 420 via a machine learning algorithm. During the training procedure for the conditional variational auto encoder, the underlying model learns encoding provided ground truth (GT) end points together with information regarding the dynamic context 125 and the static context 160 of the road user 130, i.e. information about other road users 130 and e.g. regarding a map of a road, wherein the context 125, 160 is provided by the backbone in form or the deep neural network 210. This entire information is encoded into a continuous latent variable providing a prior distribution as a result of the training procedure. During the training procedure, the predicted trajectory end points are compared with the GT end points.

During inference, the continuous latent variable is thereafter sampled from the prior distribution and then decoded into the predicted end points 422, i.e. into context conditional multi-modal goal positions or end points for the road user 130. The target end point generator 420 can be trained independently from the further parts of the entire machine learning algorithm on which the method according to the disclosure relies.

The predicted end points 422 are transferred to the target trajectory generator 430 which also receives the output of the feature extraction network 410 comprising information or characteristics regarding the dynamic context 125 and the static context 160 for the road user 130. The target trajectory generator 430 uses the predicted end points 422 to generate one or more kinetically feasible trajectories for the road user 130, i.e. one single trajectory 432 for each predicted end point 422.

The target trajectory generator 430 applies a bicycle model which constrains the respective trajectories generated based on the predicted end points 422 to realistic margins. The target trajectory generator 430 uses the bicycle model in that a machine learning algorithm is applied which is configured to learn parameters of the bicycle model. The parameters of the bicycle model include an acceleration and a yaw rate of the respective road user 130, for example. The output of the target trajectory generator 430 includes one or more predicted trajectories 432 which include respective positions and, along the trajectory, information regarding dynamic properties of the road user 130. Although the target trajectory generator 430 may also predict a probability score for the respective one of the predicted trajectories 432, it may fail to properly identify which one of the trajectories 432 are realistic and in line with the dynamic context 125 and the static context 160 of the road user 130, i.e. with the context of the respective traffic scene.

The predicted trajectories 432 are transferred, together with the output of the feature extraction network 410 as described above, to the target trajectory discriminator 440 in order to evaluate each of the predicted trajectories 432. In other words, the trajectory evaluation step 340 is performed by the target trajectory discriminator 440. In order to train the evaluation, the target trajectory discriminator 440 also receives information regarding real trajectories as ground truth for the road users 130 under a consideration (see e.g. Fig. 1). That is, features from the backbone system, i.e. the deep neural network 210, related to the real trajectories are used for providing respective predicted trajectories which are compared to the for real or ground truth trajectories in order to learn classifying a predicted trajectory as real or false. During inference, the predicted trajectories 432 a subjected to the classification learned by the target trajectory discriminator 440 in order to assess the respective predicted trajectory 432.

In detail, the target end point generator 420, the target trajectory generator 430 and the target trajectory discriminator 440 are realized as a generative adversarial network (GAN). The target trajectory discriminator 440 is configured to evaluate each predicted trajectory 432 by using the classification provided by the GAN.

For each of the predicted trajectories 432, the target trajectory discriminator 440 outputs a normalized confidence score 444. The confidence score 444 includes a number from 0 to 1 for each or the predicted trajectories 432 and describes how feasible or realistic the respective predicted trajectory 432 is.

The model on which the entire machine learning algorithm and the method according to the disclosure rely is trained by a combination of a mean squared error loss and a minmax loss which ensures convergence of the training. The entire output of the method, i.e. the predicted trajectories 432 together with the respective confidence score 444 for each of the trajectories 432 may be used to support a host planning task, e.g. for the host vehicle 100 as schematically shown in Fig. 1. That is, multiple feasible trajectories for the host vehicle 100 are generated and evaluated regarding the likelihood, e.g. in a tree-search based approach.

In summary, the multi-modal trajectory generation 330 (see Fig. 3) uses a two-stage approach for converting the multi-modal trajectory prediction problem into the two smaller problems of multi-modal goal prediction or end point prediction and a single-modal trajectory prediction, i.e. a prediction of one single trajectory for each of the predicted end points. In addition, the confidence score 444 is provided for each of the predicted trajectories 432 in order to provide information regarding their reliability.

Fig. 5 shows a flow diagram 500 illustrating a method for determining and evaluating a trajectory of a road user. At 502, input data associated with a state of movement and with an environment of the road user may be received. At 504, characteristics related to the road user may be extracted from the input data. At 506, one or more trajectory end points may be determined for the road user by using the extracted characteristics. At 508, a respective trajectory associated with the one of the trajectory end points may be determined for each of trajectory end points by using the associated trajectory end point and the extracted characteristics. At 510, the respective trajectory of the road user may be evaluated by using a classification which relies on the extracted characteristics to provide a confidence score for each trajectory associated with one of the trajectory end points.

According to various embodiments, the method may rely on at least one machine learning algorithm, the input data may include embedded features which may be provided by a prediction algorithm and which may include information regarding other road users and regarding a static environment of the road user, and a feature extraction algorithm may be applied to the embedded features in order to provide the extracted characteristics.

According to various embodiments, determining one or more trajectory end points for the road user may include applying a machine learning algorithm configured to learn encoding the extracted characteristics and ground truth data of real trajectories into at least one latent variable.

According to various embodiments, determining one or more trajectory end points for the road user by using the extracted characteristics may further include: sampling the at least one latent variable from a prior distribution provided by the machine learning algorithm when learning to encode the extracted features and the ground truth data of real trajectories, and decoding the at least one latent variable into the one or more trajectory end points.

According to various embodiments, determining the respective trajectory of the road user may include determining positions of the road user starting from the current position of the road user up to the associated trajectory end point and determining dynamic parameters of the road user for each of the positions.

According to various embodiments, determining the respective trajectory of the road user may include applying a machine learning algorithm which may be configured to learn parameters of a bicycle model which may be associated with the positions of the road user along the trajectory.

According to various embodiments, the machine learning algorithm may be trained regarding the step of evaluating of the trajectory by: providing ground truth trajectories and predicted trajectories for a plurality of road users, wherein the predicted trajectories may be determined by applying extracted characteristics derived from training input data associated with a respective state of movement and a respective environment of each of the plurality of road users, and learning the classification of the road user by applying a generative adversarial network to the ground truth trajectories and the predicted trajectories.

According to various embodiments, a generative adversarial network may be utilized to provide the classification for evaluating the respective trajectory of the road user.

According to various embodiments, a common training procedure of the machine learning algorithm may be performed for the steps of determining and evaluating the trajectory of the road user.

Each of the steps 502, 504, 506, 508, 510 and the further steps described above may be performed by computer hardware components.

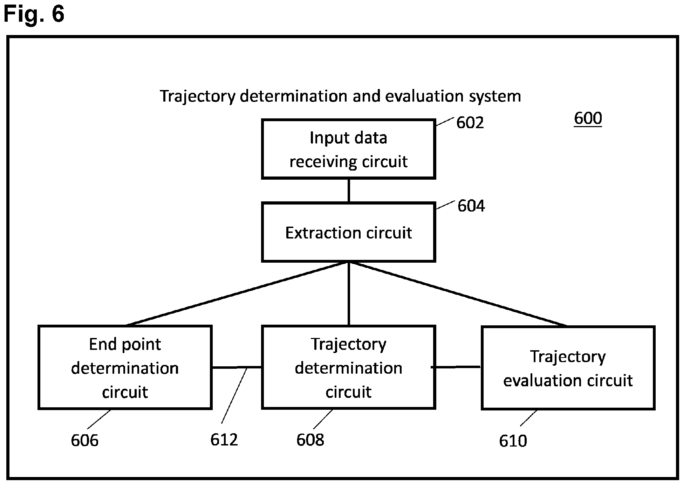

Fig. 6 shows a trajectory determination and evaluation system 600 according to various embodiments. The trajectory determination and evaluation system 600 may include an input data receiving circuit 602, an extraction circuit 604, an end point determination circuit606, a trajectory determination circuit 608 and trajectory evaluation circuit 610.

The input data receiving circuit 602 may be configured to receive input data associated with a state of movement and with an environment of the road user. The extraction circuit 604 may be configured to extract characteristics related to the road user from the input data. The end point determination circuit 606 may be configured to determine one or more trajectory end points for the road user by using the extracted characteristics. The trajectory determination circuit 608 may be configured to determine, for each of the trajectory end points, a respective trajectory associated with one of trajectory end points by using the associated trajectory end point and the extracted characteristics. The trajectory evaluation circuit 610 may be configured to evaluate the respective trajectory of the road user by using a classification which relies on the extracted characteristics to provide a confidence score for each trajectory associated with one of the trajectory end points.

The input data receiving circuit 602, the extraction circuit 604, the end point determination circuit 606, the trajectory determination circuit 608 and the trajectory evaluation circuit 610 may be coupled to each other, e.g. via an electrical connection 612, such as e.g. a cable or a computer bus or via any other suitable electrical connection to exchange electrical signals.

A "circuit" may be understood as any kind of a logic implementing entity, which may be special purpose circuitry or a processor executing a program stored in a memory, firmware, or any combination thereof.

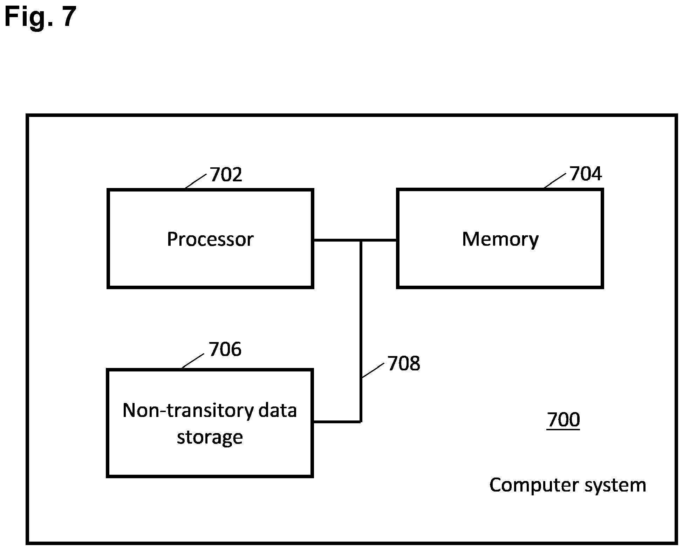

Fig. 7 shows a computer system 700 with a plurality of computer hardware components configured to carry out steps of a computer implemented method for integrating a radar sensor in a vehicle according to various embodiments. The computer system 700 may include a processor 702, a memory 704, and a non-transitory data storage 706.

The processor 702 may carry out instructions provided in the memory 704. The non-transitory data storage 706 may store a computer program, including the instructions that may be transferred to the memory 704 and then executed by the processor 702.

The processor 702, the memory 704, and the non-transitory data storage 706 may be coupled with each other, e.g. via an electrical connection 708, such as e.g. a cable or a computer bus or via any other suitable electrical connection to exchange electrical signals.

As such, the processor 702, the memory 704 and the non-transitory data storage 706 may represent input data receiving circuit 602, the extraction circuit 604, the end point determination circuit 606, the trajectory determination circuit 608, the trajectory evaluation circuit 610, as described above.

The terms "coupling" or "connection" are intended to include a direct "coupling" (for example via a physical link) or direct "connection" as well as an indirect "coupling" or indirect "connection" (for example via a logical link), respectively.

It will be understood that what has been described for one of the methods above may analogously hold true for the trajectory determination and evaluation system 600 and/or for the computer system 700.

### Reference numeral list

- 100: vehicle
- 110: perception system
- 115: field of view
- 120: computer system
- 121: processing unit
- 122: memory, database
- 124: control system
- 125: dynamic context
- 130: road users
- 140: vehicle
- 150: pedestrian
- 160: static context
- 170: traffic sign
- 180: lane markings
- 210: deep neural network
- 220: ego dynamic of the host vehicle
- 230: backbone
- 240: ground truth
- 250: loss function
- 310: embedded features
- 320: feature extraction
- 330: trajectory generation
- 340: trajectory evaluation
- 410: feature extraction network
- 420: target end point generator
- 422: predicted end points
- 430: target trajectory generator
- 432: predicted trajectories
- 440: target trajectory discriminators
- 444: confidence score

- 500: flow diagram illustrating a method for determining and evaluating a trajectory of a road user
- 502: step of receiving input data associated with a state of movement and with an environment of the road user
- 504: step of extracting characteristics related to the road user from the input data
- 506: step of determining one or more trajectory end points for the road user by using the extracted characteristics
- 508: step of determining, for each of the trajectory end points, a respective trajectory associated with one of the trajectory end points by using the associated trajectory end point and the extracted characteristics
- 510: step of evaluating the respective trajectory of the road user by using a classification which relies on the extracted characteristics to provide a confidence score for each trajectory associated with one of the trajectory end points

- 600: trajectory determination and evaluation system
- 602: input data receiving circuit
- 604: extraction circuit
- 606: end point determination circuit
- 608: trajectory determination circuit
- 610: trajectory evaluation circuit
- 612: connection

- 700: computer system
- 702: processor
- 704: memory
- 706: non-transitory data storage
- 708: connection

## Claims

1. Computer implemented method for determining and evaluating a trajectory of a road user (130),
the method comprising:
receiving input data (230, 310) associated with a state of movement and with an environment of the road user (130),
extracting characteristics related to the road user from the input data (230, 310),
determining one or more trajectory end points (422) for the road user (130) by using the extracted characteristics,
determining, for each of the trajectory end points (422), a respective trajectory (432) associated with one of the trajectory end points (422) by using the associated trajectory end point (422) and the extracted characteristics,
evaluating the respective trajectory (432) of the road user (130) by using a classification which relies on the extracted characteristics to provide a confidence score (444) for each trajectory (432) associated with one of the trajectory end points (422).

2. Method according to claim 1 , wherein
the method relies on at least one machine learning algorithm,
the input data (230, 310) includes embedded features (310) which are provided by a prediction algorithm (210) and which include information regarding other road users (130) and regarding a static environment (160) of the road user, and
a feature extraction algorithm (410) is applied to the embedded features (310) in order to provide the extracted characteristics.

3. Method according to claim 1 or 2, wherein
determining one or more trajectory end points (422) for the road user (130) includes applying a machine learning algorithm configured to learn encoding the extracted characteristics and ground truth data of real trajectories into at least one latent variable.

4. Method according to claim 3, wherein
determining one or more trajectory end points (422) for the road user (130) by using the extracted characteristics further includes:
sampling the at least one latent variable from a prior distribution provided by the machine learning algorithm when learning to encode the extracted features and the ground truth data of real trajectories, and
decoding the at least one latent variable into one or more trajectory end points (422).

5. Method according to any one of claims 2 to 4, wherein
determining the respective trajectory (432) of the road user (130) includes determining positions of the road user (130) starting from the current position of the road user (130) up to the associated trajectory end point (422) and determining dynamic parameters of the road user (130) for each of the positions.

6. Method according to claim 5, wherein
determining the respective trajectory (432) of the road user (130) includes applying a machine learning algorithm which is configured to learn parameters of a bicycle model which are associated with the positions of the road user (130) along the trajectory (432).

7. Method according to any one of claims 2 to 6, wherein
the machine learning algorithm is trained regarding the step of evaluating of the trajectory (432) by:
providing ground truth trajectories and predicted trajectories for a plurality of road users, wherein the predicted trajectories are determined by applying extracted characteristics derived from training input data associated with a respective state of movement and a respective environment of each of the plurality of road users, and
learning the classification of the road user (130) by applying a generative adversarial network to the ground truth trajectories and the predicted trajectories.

8. Method according to any one of claims 2 to 7, wherein
the machine learning algorithm includes a generative adversarial network which is utilized to provide the classification for evaluating the respective trajectory (432) of the road user (130).

9. Method according to any one of claims 2 to 8, wherein
a common training procedure of the machine learning algorithm is performed for the steps of determining and evaluating the respective trajectory of the road user (130).

10. Computer system (700), the computer system (700) being configured to carry out the computer implemented method of at least one of claims 1 to 9.

11. Computer system (700) according to claim 10, comprising:
an end point generator (420) configured to determine one or more trajectory end points (422) for a road user (130) by using characteristics extracted from input data (230, 310),
a trajectory generator (430) configured to determine, for each of the trajectory end points (422), a respective trajectory (432) associated with one of the trajectory end points (422) by using the associated trajectory end point (422) and the extracted characteristics, and
a discriminator (440) configured to evaluate each trajectory (432) associated with one of the trajectory end points (422).

12. Computer system (700) according to claim 11, wherein
the end point generator (420), the trajectory generator (430) and the discriminator (440) are implemented as a generative adversarial network,
the discriminator (440) is configured to evaluate each trajectory (432) by using a classification provided by the generative adversarial network.

13. Vehicle (100) including a perception system (110) and the computer system (700) of any one of claims 10 to 12.

14. Vehicle (100) according to claim 13,
further including a control system (124) being configured to control the actual trajectory of the vehicle (100),
wherein computer system is configured to transfer the at least one evaluated trajectory (432) of the road user (130) to the control system (124) in order to enable the control system (124) to apply the evaluated trajectory (432) of the road user (130) when controlling the actual trajectory of the vehicle (100).

15. Non-transitory computer readable medium comprising instructions for carrying out the computer implemented method of at least one of claims 1 to 10.
